(19) Europäisches Patentamt

European Patent Office

Office européen des brevets

(11) **EP 1 141 660 B1**

(12) **EUROPÄISCHE PATENTSCHRIFT**

(45) Veröffentlichungstag und Bekanntmachung des Hinweises auf die Patenterteilung:
**29.12.2004 Patentblatt 2004/53**

(21) Anmeldenummer: **99963200.3**

(22) Anmeldetag: **04.11.1999**

(51) Int Cl.⁷: **G01D 5/04**, G01D 5/245, B62D 15/02

(86) Internationale Anmeldenummer:
**PCT/DE1999/003523**

(87) Internationale Veröffentlichungsnummer:
**WO 2000/034746 (15.06.2000 Gazette 2000/24)**

(54) **VORRICHTUNG UND VERFAHREN ZUR MESSUNG DER WINKELLAGE EINES DREHBAREN KÖRPERS**

DEVICE AND METHOD FOR DETECTING THE RELATIVE POSITION OF A ROTATABLE BODY

DISPOSITIF ET PROCEDE POUR LA MESURE DE LA POSITION ANGULAIRE D'UN CORPS ROTATIF

(84) Benannte Vertragsstaaten:
**DE FR GB IT**

(30) Priorität: **04.12.1998 DE 19855960**

(43) Veröffentlichungstag der Anmeldung:
**10.10.2001 Patentblatt 2001/41**

(73) Patentinhaber: **ROBERT BOSCH GMBH**
**70442 Stuttgart (DE)**

(72) Erfinder:
- **DILGER, Elmar**
  **D-70771 Leinfelden (DE)**
- **MUELLER, Bernd**
  **D-71229 Leonberg (DE)**

(56) Entgegenhaltungen:
DE-A- 3 900 270         DE-A- 19 506 938
FR-A- 2 697 081

**Beschreibung**

Die vorliegende Erfindung betrifft eine Vorrichtung und ein Verfahren zur Messung der Winkellage eines drehbaren Körpers, insbesondere eines um mehr als 360° drehbaren Körpers nach den Oberbegriffen der Ansprüche 1 bzw. 4.

Bei verschiedenen Einrichtungen, insbesondere bei Einrichtungen, mit deren Hilfe die Winkelstellung einer drehbaren Welle ermittelt werden soll, besteht das Bedürfnis, gleich nach der Inbetriebnahme der Einrichtung die genaue Stellung der Welle zu kennen. Diese Forderung läßt sich am besten mit Hilfe von analogen Winkelsensoren, beispielsweise Potentiometern realisieren, die in jeder Position nach dem Einschalten sofort den gültigen Winkelstellungswert in Form einer Spannung ausgeben.

Werden solche Einrichtungen zur Winkelmessung für Winkelbereiche, die größer als 360° sind, eingesetzt, ergibt sich das Problem, daß nicht mehr feststellbar ist, in welcher Umdrehung sich die Welle befindet. Zur Auswertung von Winkelbereichen, die größer als 360° sind, können jedoch Inkrementalgeber verwendet werden, bei denen die Winkelstellung durch Vor- und Rückwärtszählen von Impulsen ermittelt wird. Mit solchen Inkrementalgebern läßt sich jedoch keine Absolutwinkelmessung durchführen, denn es können nur Inkremente gezählt werden, die sich an einem Aufnehmer vorbei bewegen.

Aus der DE-OS 195 06 938 ist eine Vorrichtung zur Erfassung der Winkellage eines drehbaren Körpers, der eine Anzahl von gleichförmigen Winkelmarken bzw. -zähnen aufweist und mit wenigstens zwei weiteren drehbaren Körpern, die eine andere Anzahl von gleichförmigen Winkelmarken bzw. -zähnen aufweisen, bekannt. Hierbei werden die Drehwinkel der beiden weiteren drehbaren Körper ermittelt, und aus diesen die Winkellage des drehbaren Körpers bestimmt. Die verwendeten rotierenden Körper sind hierbei Zahnräder, wobei der zu messende drehbare Körper n Zähne, und die beiden weiteren Zahnräder m bzw. m + 1 Zähne aufweisen.

Aufgabe der Erfindung ist die Schaffung einer Vorrichtung bzw. eines Verfahrens, mit der bzw. dem sich die Messung eines Winkels eines drehbaren Körpers, insbesondere eines um mehr als 360° drehbaren Körpers, besonders einfach gestaltet.

Diese Aufgabe wird gelöst durch eine Vorrichtung mit den Merkmalen des Patentanspruchs 1 sowie ein Verfahren mit den Merkmalen des Patentanspruchs 4.

Erfindungsgemäß ist die Erfassung der Winkellage eines drehbaren Körpers, beispielsweise eines Lenkrades, in sehr einfacher und fehlertoleranter Weise möglich. Insbesondere bei Verwendung einer größeren Anzahl von mit dem drehbaren Körper zusammenwirkenden weiteren drehbaren Körpern ist ein höherer Fehlertoleranzgrad bzw. eine bessere Winkelauflösung im Vergleich zu herkömmlich bekannten Systemen geschaffen.

Zweckmäßigerweise sind die Winkel $\theta$ und $\psi$ der weiteren drehbaren Körper mittels periodischer Winkelsensoren ermittelbar, und ist der Winkel $\alpha$ des ersten drehbaren Körpers in einer Auswerteschaltung unter Berücksichtigung der Winkel $\theta$, $\psi$ sowie der Anzahlen $n$, $n_i$, $n_j$ der jeweiligen Winkelmarken ermittelbar. Bei Verwendung derartiger periodischer Winkelsensoren gestaltet sich die rechnerische Auswertung der Winkel $\theta$ und $\psi$ unter Berücksichtigung der jeweiligen Anzahlen der Winkelmarken sehr einfach, da die Auswertung mittels trigonometrischer Funktionen erfolgen kann.

Gemäß einer bevorzugten Ausführungsform der erfindungsgemäßen Vorrichtung arbeiten die Winkelsensoren paarweise als Absolutwertgeber, und sind insbesondere als AMR-Winkelsensoren, welche mit den weiteren drehbaren Körpern in Verbindung stehende Magnete abtasten, ausgebildet. Derartige AMR-Winkelsensoren sind relativ preiswert erhältlich und erweisen sich in der Praxis als sehr robust und zuverlässig.

Eine bevorzugte Ausführungsform der vorliegenden Erfindung wird nun anhand der beigefügten Zeichnung im einzelnen dargestellt. In dieser zeigt

Figur 1      eine schematische Ansicht einer ersten bevorzugten Ausführungsform der erfindungsgemäßen Vorrichtung, mit der der Winkel einer um mehr als 360° drehbaren Welle erfaßbar ist,

Figur 2      das Ausführungsbeispiel eines Lenkwinkelsensors, wobei Figur 2a die Anordnung der Zahnräder in einer Draufsicht und Figur 2b die gesamte Anordnung zur Erfassung des Lenkwinkels einschließlich der zugehörigen Sensoren sowie einer Auswerteschaltung in perspektivischer Ansicht darstellt, und

Figur 3      ein Flußdiagramm einer bevorzugten Ausführungsform des erfindungsgemäßen Verfahrens.

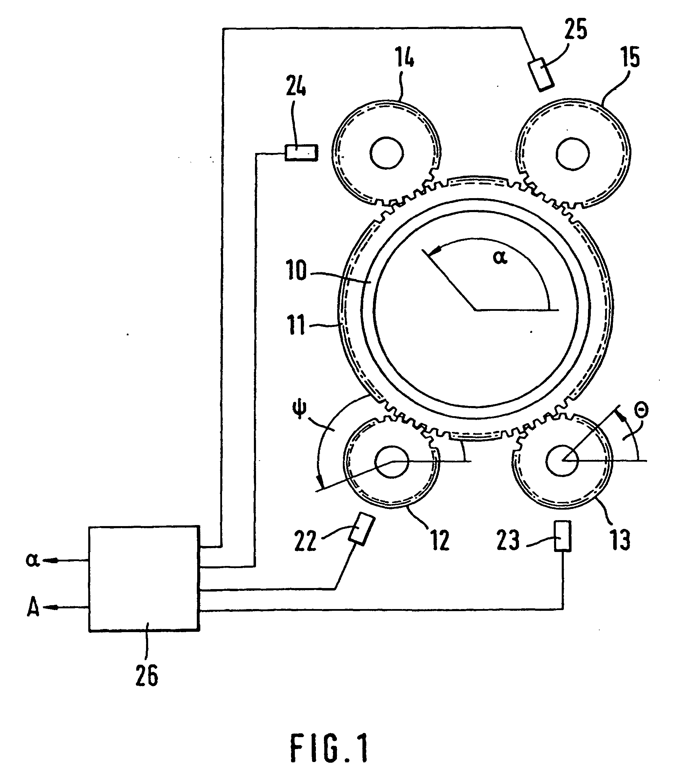

In Figur 1 bezeichnet 10 eine Achse, deren Drehwinkel $\alpha$ gemessen werden soll. Auf diese Achse 10 ist ein Zahnrad 11 aufgebracht, das n Zähne aufweist. Vier weitere Zahnräder 12, 13, 14, 15 sind ortsfest mit dem Zahnrad 11 gekoppelt. Für die Anzahl der Zähne der Zahnräder 12 bis 15 gilt die Beziehung $(n_i, n_j) = 1$ $(1 \leq i < j \leq 4)$, d.h. die Zahnzahlen der einzelnen Zahnräder sind paarweise teilerfremd bzw. relativ prim. Beispielhaft seien die folgenden Zahnzahlen angegeben: Zahnzahl n des Zahnrades 11: 100, Zahnzahl $n_1$ des Zahnrads 12: 29, Zahnzahl $n_2$ des Zahrads 13: 31, Zahnzahl $n_3$ des Zahnrads 14: 37 und Zahnzahl $n_4$ des Zahnrads 15: 41.

Den Zahnrädern 12, 13, 14, 15 sind jeweils periodische Winkelsensoren 22, 23, 24 bzw. 25 zugeordnet. Als Winkelsensoren sind insbesondere photoelektrische, oder nichtkontaktierende elektromagnetische Sensoren, welche beispielsweise den Hall-Effekt oder den magnetoresistiven Effekt ausnutzen, verwendbar. Es sei angenommen, daß die Winkelsensoren 22, 23, 24, 25 sinusförmige bzw. kosinusförmige Ausgangssignale liefern (Periodizität 360° oder ein ganzzahliger Teiler von 360°).

Die Winkelsensoren 22, 23, 24, 25 sind mit einer elektronischen Auswerteschaltung 26 verbunden, in der die zur Bestimmung des Achswinkels $\alpha$ erforderlichen Berechnungen durchgeführt werden.

Für den Fall, daß die Zahnzahlen der Zahnräder 12, 13, 14, 15 teilerfremd sind, bildet jedes Sensorpaar (22, 23; 22, 24; 22, 25; 23, 24; 23, 25; 24, 25) einen absoluten Sensor innerhalb eines bestimmten Bereiches des Absolutwinkels, nämlich über $\pm 2$ vollständige Umdrehungen des Zahnrades 10.

Beispielhaft seien die Zahnräder 12, 13 bzw. die diesen zugeordneten Sensoren 22, 23 betrachtet. Es soll gezeigt werden, daß ein Winkel bzw. eine Winkellage $\alpha$ des Zahnrades 11 durch die Ausgangssignale der zwei Sensoren 22, 23 eindeutig bestimmt ist. D.h., daß der Winkel $\alpha$ berechnet werden kann, wenn die vier Werte $\sin n/n_1\ \alpha$, $\cos n/n_1\ \alpha$, $\sin n/n_2\ \alpha$ und $\cos n/n_2\ \alpha$ bekannt sind.

Es sei angenommen, es existieren $\alpha \neq \beta$ mit

$$\sin n/n_1\ \alpha = \sin n/n_1\ \beta,$$

$$\sin n/n_2\ \alpha = \sin n/n_2\ \beta,$$

$$\cos n/n_1\ \alpha = \cos n/n_1\ \beta \text{ und}$$

$$\cos n/n_2\ \alpha = \cos n/n_2\ \beta.$$

Es existieren daher Werte $k_1$ und $k_2$ mit

$$n/n_1\ \beta = n/n_1\ \alpha + k_1 \cdot 360°$$

und

$$n/n_2\ \beta = n/n_2\ \alpha + k_2 \cdot 360°.$$

Somit gilt die Beziehung $n_1 \cdot k_1 = n_2 \cdot k_2$. Ferner gilt, da $(n_1, n_2) = 1$, $k_2 \geq n_1$ und $k_1 \geq n_2$.

Soll nun der Winkelsensor in der Lage sein, einen absoluten Winkel im Bereich von $\pm 2$ Umdrehungen festzustellen, werden die Werte $n$, $n_1$, $n_2$ derart gewählt, daß $n_1 \cdot n_2 \geq 4 \cdot n$ ist, so daß man die Beziehung $|\beta - \alpha| \geq 4 \cdot 360°$ erhält. Somit ist der Winkel $\alpha$ eindeutig innerhalb eines Bereiches von $\pm 2$ Umdrehungen bestimmt.

Das Zahnrad- bzw. Sensorpaar 11, 13 bzw. 22, 23 bildet daher einen absoluten Sensor.

Unter der Voraussetzung, daß die Winkelsensoren 22, 23, 24, 25 paarweise sogenannte Absolutsensoren sind, liefern sie sofort nach Einschalten der Einrichtung zur Erfassung der Winkellage der Welle 10 die beim Einschalten vorliegenden Drehwinkel der ihnen jeweils zugeordneten Zahnräder (dargestellt sind lediglich die Drehwinkel $\psi$ und $\theta$ der Zahnräder 12 und 13). Aus diesen Winkeln kann eindeutig der Winkel $\alpha$ der Welle 10 bestimmt werden, sofern die Zahl $n$ der Zähne des Zahnrads 11 und die Zahlen $n_1$, $n_2$ der Zähne der Zahnräder 12, 13 bekannt sind, wie im folgenden gezeigt wird.

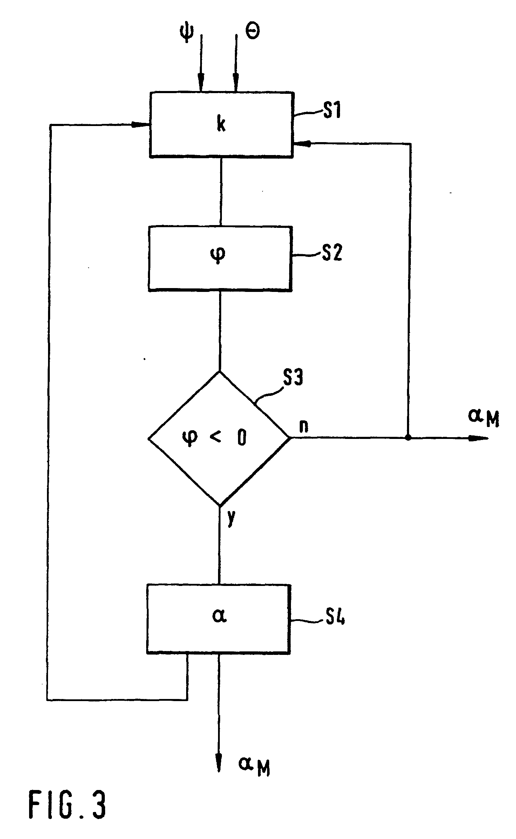

Es werden wiederum (beispielhaft) die Zahnräder 12, 13 und die ihnen zugeordneten Sensoren 22, 23 als Paar betrachtet. Auch beliebige andere Zahnrad- bzw. Sensorpaare können zur Erfassung des Drehwinkels $\alpha$ verwendet werden. Entsprechend der Größe des zu erfassenden Winkels $\alpha$ sind, wie bereits dargestellt, die Zahlen der Zähne $n$, $n_1$, $n_2$ der einzelnen Zahnräder zu wählen. Im folgenden sei ferner ohne Beschränkung der Allgemeingültigkeit, zur Vereinfachung der mathematischen Darstellung angenommen, daß $n_1 > n_2$, sowie $n_1 = n_2 + 1$ sei. Die dargestellten Rechnungen sind in analoger Weise für beliebige andere teilerfremde bzw. relativ prime Zahlenpaare $n_1$, $n_2$ mit $n_1 > n_2 + 1$ anwendbar. Die Berechnung des Drehwinkels $\alpha$ erfolgt nach dem Einschalten der erfindungsgemäßen Vorrichtung nach einem Verfahren, wie es sich z.B. Figur 3 entnehmen läßt. Es wird in der Auswerteschaltung 26 in einem ersten Schritt S1 die nächste ganze Zahl des Ausdrucks

$$k = \frac{n_1 \cdot \theta - n_2 \cdot \psi}{\Omega} \qquad (1)$$

berechnet, wobei die Winkel $\theta$ und $\psi$ zuvor gemessen wurden. Als Schritt S2 wird dann der Winkel $\alpha$ berechnet, wobei gilt:

$$\alpha = \frac{n_2 \cdot \psi + n_1 \cdot \theta - 2n_2 k\Omega - k\Omega}{2n} \qquad (2)$$

In Schritt S3 wird geprüft, ob der zuvor ermittelte Wert $\alpha$ negativ ist. Ist dies der Fall, wird im Schritt S4 die volle Winkelperiode addiert, es gilt:

$$\alpha' = \alpha + \frac{n_1 \cdot n_2}{n} \cdot \Omega \qquad (3)$$

Der so erhaltene Winkel $\alpha'$ wird dann als tatsächlicher Meßwert $\alpha M$ übernommen. Wird in Schritt S3 dagegen erkannt, daß $\alpha$ nicht kleiner als 0 ist, wird der in Schritt S2 ermittelte Winkel als gemessener Winkel $\alpha M$ ausgegeben.

Nach Ausgabe des Meßwertes αM beginnt die nächste Winkelbestimmung aus den nächsten gemessenen Winkeln θ und ψ im Schritt S1.

Der Meßfehler E der einzelnen Winkelsensoren 22, 23 überträgt sich nach Gleichung (2) im Verhältnis $n_2/n$ auf den Fehler des Winkels α, so daß durch geeignete Wahl des Übertragungsverhältnisses $n_2/n$ die Meßgenauigkeit eingestellt werden kann. Wird der Meßfehler der einzelnen Sensoren allerdings so groß, daß bei der Rundung nach Gleichung (1) eine falsche ganze Zahl k berechnet wird, so ändert sich der ermittelte Winkel α nicht kontinuierlich, sondern sprunghaft um den Betrag:

$$\Delta\alpha = \pm \frac{2n_2 + 1}{2n} \cdot \Omega \qquad (4)$$

Dies läßt sich dadurch abfangen, daß die Änderung des Wertes für k nach Formel (1) verfolgt wird. Beim kontinuierlichen Übergang von ψ und/oder θ über Ω nach 0 und umgekehrt kann der Wert von k nur ganzzahlige Änderungen von $\pm n_1$ und $\pm n_2$ annehmen. Wird ein anderer Sprung registriert, ist dies ein Hinweis auf einen zu großen Meßfehler oder einen defekten Einzelsensor. Die im Verfahren nach Figur 3 in dem Schritt S1 ermittelten aufeinanderfolgenden Werte für k können also miteinander verglichen werden und bei.unplausiblen Änderungen kann ein Fehler erkannt werden. Eine Fehleranzeige A (siehe Figur 1) kann dann von der Auswerteschaltung 26 ausgegeben werden. Besonders günstig ist, daß derartige Plausibilitätsuntersuchungen bei dem dargestellten Ausführungsbeispiel für verschiedene Sensorpaare durchgeführt und miteinander verglichen werden.können.

Damit der richtige Wert für k erhalten wird, muß der Winkelfehler der Einzelsensoren 22,.23 kleiner sein als

$$\delta = \pm \frac{0{,}5 \cdot \Omega}{2n_2 + 1} \qquad (5)$$

womit sich der maximale Winkelfehler für den Winkel α wie folgt ergibt:

$$\delta\alpha = \frac{n_2 \cdot \Omega}{2n \cdot (2n_2 + 1)} \qquad (6)$$

Größere Winkelfehler der Einzelsensoren führen auf einen Sprung von α, der durch die unerlaubte Änderung von k festgestellt werden kann.

Die Möglichkeit, den Drehwinkel α aus den beiden Winkeln ψ und θ zu berechnen, läßt sich wie folgt erklären:

Aufgrund der Zahnzahlen gilt der Zusammenhang zwischen dem Winkel α und den beiden Winkeln ψ und θ

$$\psi = \frac{n}{n_1} \cdot \alpha \, \mathrm{mod} \, \Omega \qquad (\mathrm{mod=modulo}) \qquad (7)$$

$$\theta = \frac{n}{n_2} \cdot \alpha \, \mathrm{mod} \, \Omega \qquad (8)$$

Da beide Winkel sich nach dem Winkel Ω wiederholen, muß nur der Rest bei der Division durch Ω verwendet werden.

Die Umkehrung von (7) und (8) lautet:

$$\alpha = \frac{n_1}{n} \cdot (\psi + i \cdot \Omega) \qquad (9)$$

bzw.

$$\alpha = \frac{n_2}{n} \cdot (\theta + j \cdot \Omega) \qquad (10)$$

wobei i und j zunächst unbekannte ganze Zahlen sind, da beispielsweise bei einem Winkel ψ zwischen 0° und Ω nicht bekannt ist, wie oft sich ψ über Ω gedreht hat.

Da (9) und (10) jedoch denselben Winkel α liefern müssen, gilt (9) = (10), was auf die Beziehung

$$n_1 \cdot i - n_2 \cdot j = \frac{n_2 \cdot \theta - n_1 \cdot \psi}{\Omega} \qquad (11)$$

führt.

Die linke Seite von (11) ist eine ganze Zahl, so daß auch die rechte Seite ganzzahlig sein muß:

$$k = \frac{n_2 \cdot \theta - n_1 \cdot \psi}{\Omega} \qquad (12)$$

Da die Winkel θ und ψ fehlerbehaftet sind (prinzipieller und statistischer Meßfehler, Digitalisierung) wird (12) in der Regeln nicht ganzzahlig sein. Wählt man aber die nächste ganze Zahl dieses Ausdrucks, so werden die Fehler der Winkel sehr stark reduziert.

Die Gleichung (11) lautet dann:

$$n_1 \cdot i - n_2 \cdot j = k \qquad (13)$$

Dies ist eine Gleichung für zwei Unbekannte i und j. Da i und j aber ganzzahlig sein müssen, hat (13) diskrete Lösungen (sogenannte diophantisches Problem). Die einzige Lösung, die man für die Auswertung braucht, läßt sich für den beispielhaft dargestellten Fall $n_1 = n_2 + 1$ leicht finden:

$$i = j = -k \qquad (14)$$

Mit diesen Werten läßt sich $\alpha$ als Mittelwert von (9) und (10) berechnen, wodurch eventuelle Meßfehler erneut verkleinert werden.

$$\alpha = \frac{n_2 \cdot \psi + n_1 \cdot \theta - 2n_2 k\Omega - k\Omega}{2n} \qquad (15)$$

Der so berechnete Winkel $\alpha$ kann sowohl positive als auch negative Werte annehmen. Um eine kontinuierliche Darstellung zu erhalten, muß bei negativen Werten, wie bereits unter Bezugnahme auf Gleichung (3) erläutert, die volle Periode des gesamten Systems addiert werden.

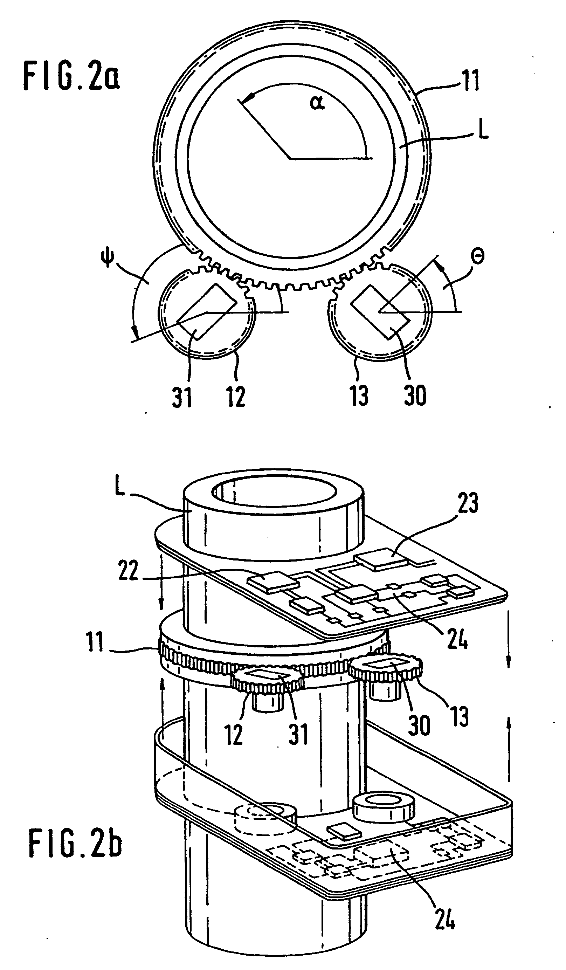

In den Figuren 2a und 2b ist eine erfindungsgemäße Vorrichtung zur Messung des Winkels der Lenkachse L eines Kraftfahrzeugs dargestellt. Zu diesem Zweck wird ein möglichst berührungsloser Sensor benötigt, der typischerweise vier Lenkradumdrehungen bzw. Umdrehungen der Lenkachse erfassen kann. Die Lenkachse L ist mit einem Zahnrad 11 ausgebildet, welches, analog zu der in Figur 1 dargestellten Vorrichtung, mit vier Zahnrädern zusammenwirkt. Der Einfachheit halber sind lediglich zwei der Zahnräder, nämlich die Zahnräder 12, 13 im einzelnen dargestellt.

Die Lenkachse L, deren Winkel $\alpha$ zu bestimmen ist, entspricht der in Figur 1 mit 10 bezeichneten Welle. Für die Zahnräder sowie die eingetragenen Winkel $\theta$ und $\psi$ gelten die Zusammenhänge nach Figur 1. Zusätzlich befinden sich auf den Zahnrädern 12 und 13 Magnete 30, 31, deren Magnetisierung in der Zahnradebene liegt. Mit Hilfe zweier als AMR-(d.h. anisotrope magnetoresistive) Sensoren ausgebildeten Winkelsensoren 22, 23 werden die Winkel $\psi$ und $\theta$ gemessen. Ein Beispiel für den Zusammenbau eines Lenkradwinkelsensors ist der Figur 2b zu entnehmen. Bei diesem Beispiel liegen die drei Zahnräder 11, 12, 13 in einer Ebene. Auf den Zahnrädern 12 und 13 sind die Magnete 30, 31 angeordnet. Mit Hilfe dieser Magnete sowie der beiden AMR-Winkelsensoren 22, 23 können die Winkel $\theta$ und $\psi$ absolut erfaßt werden. Die Auswerteschaltung, die die Ausgangssignale der AMR-Sensoren verarbeitet, ist als Hybridschaltung 24 dargestellt. Die Bestimmung der Winkel $\psi$ und $\theta$ erfolgt durch Erkennen der Magnetfeldverläufe, die von den Magneten 30, 31 verursacht werden.

Anstelle von AMR-Sensoren können auch andere Winkelsensoren, beispielsweise Winkelsensoren auf Hall-Basis, optische Sensoren, induktive, kapazitive oder resistive Sensoren verwendet werden. Je nach verwendetem Sensortyp ist es erforderlich, die Zahnräder in geeigneter Weise anzupassen. Anstelle von Zahnrädern können auch Codescheiben, auf denen geeignete Codesysteme aufgebracht sind, verwendet werden.

Es sei angemerkt, daß die dargestellte Vorrichtung zur Winkelmessung sehr günstige Fehlertoleranzeigenschaften aufweist. Beispielsweise bei Verwendung von vier Zahnrädern 12, 13, 14, 15 erhält man, wie bereits erwähnt, sechs Zahnrad- bzw. Sensorpaare, wodurch drei aufeinanderfolgende Sensorfehler festgestellt und zwei aufeinanderfolgende Sensorfehler korrigiert werden können.

**Patentansprüche**

1. Vorrichtung zur Erfassung der Winkellage eines ersten drehbaren Körpers (10, L), der eine Anzahl n von gleichförmigen Winkelmarken bzw. Zähnen (11) aufweist, mit wenigstens zwei drehbaren Körpern (12, 13, 14, 15), die jeweils $n_1, n_2, n_3, n_4$ gleichförmige Winkelmarken bzw. Zähnen aufweisen, wobei die Winkelmarken der weiteren drehbaren Körper (12, 13, 14, 15) mit den Winkelmarken (11) des ersten drehbaren Körpers (10) derart zusammenwirken, daß durch Ermittlung der Winkellagen $\theta$, $\psi$ der wenigstens zwei weiteren drehbaren Körper (12, 13, 14, 15) die Winkellage $\alpha$ des ersten drehbaren Körpers bestimmbar ist,
   **dadurch gekennzeichnet,**
   **daß** im Falle von zwei drehbaren Körpern (12, 13; 12, 14; 12, 15; 13, 14; 13, 15; 14, 15) gilt $|n_i - n_j| > 1$ und $(n_i, n_j) = 1$ bzw. $n_i, n_j$ teilerfremd, und im Falle von mehr als zwei drehbaren Körpern gilt $(n_i, n_j) = 1$, wobei $1 \leq i < j \leq N$, mit N als Gesamtzahl der weiteren drehbaren Körper (12, 13, 14, 15).

2. Vorrichtung nach Anspruch 1, **dadurch gekennzeichnet, daß** die Winkel $\theta$ und $\psi$ mittels periodischer Winkelsensoren (22, 23, 24, 25), und der Winkel $\alpha$ in einer Auswerteschaltung (16) unter Berücksichtigung der Winkel $\theta$ und $\psi$ sowie der Anzahlen n, $n_i$, $n_j$ der Winkelmarken ermittelbar sind bzw. ist.

3. Vorrichtung nach Anspruch 2, **dadurch gekennzeichnet, daß** die Winkelsensoren (22, 23, 24, 25) paarweise als Absolutwertgeber arbeiten und insbesondere als AMR-Winkelsensoren, welche mit den weiteren drehbaren Körpern (12, 13, 14, 15) in Verbindung stehende Magnete (30, 31) abtasten, ausgebildet sind.

4. Verfahren zur Messung des Winkels eines drehbaren Körpers (10, L), insbesondere eines um mehr als 360° drehbaren Körpers, der eine Anzahl von gleichförmigen Winkelmarken bzw. Zähnen (n) aufweist und mit wenigstens zwei weiteren drehbaren Körpern (12, 13, 14, 15), die jeweils andere Anzah-

len $n_1$, $n_2$, $n_3$, $n_4$ von gleichförmigen Winkelmaßen bzw. -zähnen aufweisen, zusammenwirkt, wobei die Winkel θ, ψ der wenigstens zwei weiteren drehbaren Körper (12, 13, 14, 15) ermittelt werden und die Winkellage α des ersten drehbaren Körpers aus den Winkeln θ und ψ ermittelt wird, **dadurch gekennzeichnet,** **daß** für die Winkelmarken bzw. Zähne der weiteren drehbaren Körper (12, 13, 14, 15) die folgenden Beziehungen gelten:

- im Falle von zwei drehbaren Körpern $|n_i-n_j|>1$ und $(n_i, n_j)=1$, und
- im Falle von mehr als zwei weiteren drehbaren Körpern $(n_i, n_j)=1$ ($1 \leq i < j \leq N$), wobei N die Gesamtzahl der weiteren drehbaren Körper (12, 13, 14, 15) ist.

## Claims

1. Device for detecting the angular position of a first rotatable body (10, L) which has a number n of uniform angle markings or teeth (11), comprising at least three rotatable bodies (12, 13, 14, 15) which in each case have $n_1$, $n_2$, $n_3$, $n_4$ uniform angle markings or teeth, the angle markings of the further rotatable bodies (12, 13, 14, 15) cooperating with the angle markings (11) of the first rotatable body (10) in such a way that the angular position α of the first rotatable body can be determined by ascertaining the angular positions θ, ψ of the at least two further rotatable bodies (12, 13, 14, 15), **characterized in that** in the case of two rotatable bodies (12, 13; 12,14; 12,15; 13,14; 13,15; 14,15), it holds that $|n_i-n_j|>1$ and $(n_i, n_j)= 1$ or $n_i$, $n_j$ relatively prime, and in the case of more than two rotatable bodies it holds that $(n_i, n_j)=1$, in which case $1 \leq i < j \leq N$, where N is the total number of the further rotatable bodies (12, 13, 14, 15).

2. Device according to Claim 1, **characterized in that** the angles θ and ψ can be ascertained by means of periodic angle sensors (22, 23, 24, 25), and the angle α can be ascertained in an evaluation circuit (16) by taking account of the angles θ and ψ as well as of the numbers n, $n_i$, $n_j$ of the angle markings.

3. Device according to Claim 2, **characterized in that** the angle sensors (22, 23, 24, 25) operate in pairs as absolute value transmitters and, in particular, are designed as AMR angle sensors which scan magnets (30, 31) connected to the further rotatable bodies (12, 13, 14, 15).

4. Method for measuring the angle of a rotatable body (10, L), in particular a body which can be rotated by more than 360°, which has a number of uniform angle markings or teeth (n) and cooperate with at least two further rotatable bodies (12, 13, 14, 15) which in each case have different numbers $n_1$, $n_2$, $n_3$, $n_4$ of uniform angle markings or teeth, the angles θ, ψ of the at least two further rotatable bodies (12, 13, 14, 15) being ascertained, and the angular position α of the first rotatable body being ascertained from the angles θ and ψ, **characterized in that** the following relationships hold for the angle markings or teeth of the further rotatable bodies (12, 13, 14, 15):

- $|n_i-n_j|>1$ and $(n_i, n_j)=1$ in the case of two rotatable bodies, and
- $(n_i, n_j)=1$ ($1 \leq i < j \leq N$), N being the total number of the further rotatable bodies (12, 13, 14, 15), in the case of more than two further rotatable bodies.

## Revendications

1. Dispositif pour la détermination de la position angulaire d'un premier corps rotatif (10, L) qui comporte un nombre n de repères d'angle ou dents (11) de même forme, faisant intervenir au moins deux autres corps rotatifs (12, 13, 14, 15) qui comportent respectivement $n_1$, $n_2$, $n_3$, $n_4$ repères d'angle ou dents de même forme, dans lequel les repères d'angle des corps rotatifs supplémentaires (12, 13, 14, 15) agissent de concert avec les repères d'angle (11) du premier corps rotatif (10), de telle manière que la détermination des positions angulaires θ, ψ des corps rotatifs supplémentaires (12, 13, 14, 15), au nombre d'au moins deux, permet de déterminer la position angulaire α du premier corps rotatif, **caractérisé en ce que** dans le cas de deux corps rotatifs (12, 13 ; 12, 14 ; 12, 15 ; 13, 14 ; 13, 15 ; 14, 15), on a : $|n_i - n_j|> 1$ et $(n_i, n_j) = 1$ (ou encore $n_i$, $n_j$ premiers entre eux) ; dans le cas de plus de deux corps rotatifs, on a : $(n_i, n_j) = 1$ avec $1 \leq i < j \leq N$, où N est le nombre total de corps rotatifs supplémentaires (12, 13, 14, 15).

2. Dispositif selon la revendication 1, **caractérisé en ce que** les angles θ et ψ peuvent être déterminés au moyen de détecteurs d'angle périodiques (22, 23, 24, 25) et l'angle α peut être déterminé au moyen d'un circuit d'exploitation (16) en tenant compte des angles θ et ψ, ainsi que des nombres n, $n_i$, $n_j$ de repères d'angle.

3. Dispositif selon la revendication 2, **caractérisé en ce que** les détecteurs d'angle (22, 23, 24, 25) fonctionnent par paires comme transmetteurs de valeur absolue et ont en particulier la forme de détecteurs d'angle AMR qui explorent des aimants (30, 31) reliés aux corps rotatifs supplémentaires (12, 13, 14, 15).

4. Procédé de mesure de l'angle d'un corps rotatif (10, L), en particulier d'un corps pouvant tourner de plus de 360°, qui comporte un nombre n de repères d'angle ou dents de même forme et qui agit de concert avec au moins deux autres corps rotatifs (12, 13, 14, 15) comportant respectivement d'autres nombres $n_1$, $n_2$, $n_3$, $n_4$ de repères d'angle ou dents de même forme,

selon lequel on détermine les angles $\theta$, $\psi$ des corps rotatifs supplémentaires (12, 13, 14, 15), au nombre d'au moins deux, et la position angulaire $\alpha$ du premier corps rotatif à partir des angles $\theta$ et $\psi$,

**caractérisé en ce que**

pour les repères d'angle ou dents des corps rotatifs supplémentaires (12, 13, 14, 15), on a les relations suivantes :

- dans le cas de deux corps rotatifs supplémentaires, $|n_i - n_j| > 1$ et $(n_i, n_j) = 1$ ;
- dans le cas de plus de deux corps rotatifs supplémentaires, $(n_i, n_j) = 1$ avec $1 \le i < j \le N$, où N est le nombre total de corps rotatifs supplémentaires (12, 13, 14, 15).

FIG.1

FIG.2a

FIG.2b

FIG.3